# EUROPÄISCHE PATENTANMELDUNG

(11) **EP 3 838 876 A1**
(43) Veröffentlichungstag der Anmeldung: **23.06.2021**
(21) Anmeldenummer: 20216545.2
(22) Anmeldetag: 22.12.2020
(51) Int. Cl.: C05G 3/00, C05G 5/20

(54) **VERFAHREN ZUR BEGRÜNUNG EINER FLÄCHE UND MOOSBEWACHSENE FLÄCHE**

(30) Priorität: 22.12.2019 DE 102019135652
(71) Anmelder: Fraunhofer Gesellschaft zur Förderung der angewandten Forschung e.V., 80686 München (DE)
(72) Erfinder: Hofbauer, Wolfgang Karl, 83626 Valley (DE); Rennebarth, Thorsten, 83626 Valley (DE)

(57) **Zusammenfassung**

Die Erfindung betrifft ein Verfahren zur Bereitstellung einer moosbewachsenen Fläche (6, 7, 8, 9) mit folgenden Schritten:
Bereitstellen einer Nährlösung mit einer gewählten Mischung an Pflanzennährstoffen und Spurenelementen;
Zugabe eines Biopolymers in die Nährlösung um eine aufzubringende Flüssigkeit (2) zu erhalten;
Wahl mindestens einer Moosart für das zuzugebende Moos
Zugabe des Mooses
Aufbringen der Flüssigkeit (2) auf die Fläche (6, 7, 8, 9).

Die Erfindung betrifft ferner eine moosbewachsene Fläche (6, 7, 8, 9), bei der das Moos mit dem geschilderten Verfahren aufgebracht ist

## Beschreibung

Die Erfindung betrifft ein Verfahren zur Begrünung einer Fläche sowie Bereitstellung einer moosbewachsenen Fläche sowie eine moosbewachsene Fläche.

### Stand der Technik

Im Bereich der Gebäudebegrünung besteht zunehmend Interesse auch an vertikaler Begrünung. Dies liegt vor allem am hohen Interesse weiter Bevölkerungskreise an einer Umgebung mit viel Grün einerseits und einer hohen Verdichtung in urbanen Bereichen andererseits. Bisherige wandgebundene Systeme sind jedoch in der Herstellung und im Betrieb aufwändig. Analog zu Dachbegrünungen besteht ein großes Interesse an extensiven Lösungen für Fassaden und Wände.

Bekannt ist ein Produkt der Firma Moosmatten Vertiko GmbH. Es besteht aus einem Wasserspeichervlies aus Polyacryl mit einem aufgenähten Filamentgelege aus Polyamidfäden, darin sind Moose eingebettet. Diese Anordnung gilt es auf die zu begrünende Fläche aufzubringen, bei einer vertikalen Fläche bedeutet dies eine Befestigung.

Unter der Bezeichnung Hydrosaat ist ein ingenieurbiologisches Verfahren zur schnellen Begrünung von Flächen bekannt. Dieses Verfahren findet Anwendung bei fehlendem Oberboden (bei der Rekultivierung), bei grobsteinigem Untergrund oder an durch Erosion gefährdeten Hängen zur schnellen Stabilisierung der Bodenoberflächen. Dabei werden Saatgut, Mulchstoffe, Dünger, Bodenhilfsstoffe und organischer Kleber mit Wasser vermischt. Diese Mischung wird mit einer Dickstoffpumpe auf die zu begrünenden Flächen aufgespritzt.

Aus der EP 0 504 089 B1 ist eine spezielle Form der Nassbegrünung unter Einsatz von Mutterboden, Pflanzensamen und anderen Bestandteilen, wie Schlacke, Portland-Zement, Steingeröll mit einer Korngröße unter 20 mm, kalkhaltige Zuschläge mit einer Korngröße zwischen 12 und 25 mm bekannt. Dabei wird erwähnt, dass dieses Verfahren für Hydrosaat geeignet ist. Es ermöglicht eine Schicht an einer vertikalen Fläche aufzubringen. Dabei haftet die Schicht an der vertikalen Fläche und ermöglicht Pflanzenwachstum.

Zu Versuchszwecken, vor allem um die Feinstaubreduktion durch Moose zu messen, wurden in der Stadt Stuttgart vertikale Flächen entlang einer Hauptstraße mit Matten, an denen Bodenmoose angebracht sind, ausgestattet. Diese Matten sind an den vertikalen Flächen befestigt.

Verschiedentlich kursiert eine Anleitung für ein sogenanntes "Moosgraffiti" bzw. einen Moosanstrich. Dabei soll beliebiges Moos gesammelt, grob zerkleinert und mit Joghurt versetzt werden. Aufgrund der Klebrigkeit des Joghurts wird eine gewisse Haftung am Untergrund erreicht, sodass die Mischung, aufgepinselt oder aufgespachtelt, eine Weile kleben bleibt. Das Moos stirbt in der Regel ab, oft bildet sich Schimmel und nach einer Weile wittert die Masse meist wieder von der Unterlage ab - es wird in der Regel also keine dauerhafte Ansiedlung von Moos erreicht. Entsprechend wurde im Prüfungsverfahren zur prioritätsbegründenden Anmeldung im Internet die Anleitung "Her mit dem Moos" gefunden.

Aus der KR 10 2009 0 083 228 A ist ein Verfahren zum Wachstum von Moos bekannt. Es wird eine Mischung beschrieben, in der das Moos gezüchtet wird. In der Schrift wird auch von einer Vorrichtung zum Anbringen des Mooses gesprochen.

Bei diversen Kollagen werden Moos, Flechten oder ähnlich strukturiertes Material auf einen Träger aufgeklebt und oft zusätzlich koloriert (die Pflanzen sind abgestorben). Derartige Produkte sind bei unterschiedlichen Herstellern erhältlich.

Aufgabe der Erfindung ist es ein einfaches Verfahren zur Begrünung vertikaler Flächen bereitzustellen sowie eine damit begrünte Fläche.

### Lösungsweg

Erfindungsgemäß wurde erkannt, dass ein Verfahren zur Bereitstellung einer moosbewachsenen Fläche mit folgenden Schritten bereitzustellen ist.

Zunächst ist eine Nährlösung mit einer gewählten Mischung an Pflanzennährstoffen und Spurenelementen bereitzustellen. Bei der Flüssigkeit handelt es sich meist um eine Lösung oder eine Suspension.

Gut geeignet ist z.B. eine Zusammensetzung die dem Murashige-Skoog Medium [1] entspricht. Diese ist näher beschrieben in Murashige, T. & Skoog, F. (1962): A Revised Medium for Rapid Growth and Bio Assays with Tobacco Tissue Cultures. Physiologia Plantarum 15(3): 473-497.,

Diese Nährlösung ist generell auf Pflanzenbedarf abgestimmt und wird bereits erfolgreich z.B. in der Gewebezucht von Pflanzen eingesetzt. Es ist wichtig, dass die Nährlösung im Vergleich zum "herkömmlichen" Anwendungsfall der Pflanzengewebezucht verdünnt hergestellt wird - eine ca. 5-20 -fache Verdünnung hat sich bewährt -, da die verwendeten Moospflanzen in der Regel auf relativ nährstoffarme Umgebungen spezialisiert sind.

Darüber hinaus ist es zu erwarten, dass zeitweise ein Austrocknen erfolgt. Um hierbei zu hohe - mitunter toxisch wirkende, Salz - und Elektrolytkonzentrationen - zu vermeiden, ist es notwendig die Lösung in verdünnter Form herzustellen.

Wichtig ist zu verstehen, dass es sich um eine auf Pflanzenbedarf abgestimmte Nährlösung handeln muss. In der eingangs geschilderten Anleitung für ein sogenanntes "Moosgraffiti" bzw. soll beliebiges Moos gesammelt, grob zerkleinert und mit Joghurt versetzt werden. Es ist nicht von der Hand zu weisen, dass auch derartige kuriose Rezepte Nährstoffe enthalten. Es kann aber nicht von einer Nährlösung gesprochen werden. Jedenfalls wird der erfindungsgemäße Erfolg damit im Regelfall nicht erreicht.

Dem folgt die Zugabe eines Biopolymers in die Nährlösung um eine aufzubringende Flüssigkeit zu erhalten. Dabei wird normalerweise ein lösliches Biopolymer gewählt, genauer gesagt ein in der Nährlösung lösliches Biopolymer.

Das Biopolymer hat mehrere Funktionen. Es soll eine verbesserte Nährstoffversorgung für die anschließend beigegebenen oder darauf applizierten Moos-Verbreitungseinheiten bzw. Moosstücke gewährleisten, es soll die anschließend beigegebenen oder darauf applizierten Moosverbreitungseinheiten bzw. Moostücke schützen und es soll die anschließend beigegebenen oder darauf applizierten Moosverbreitungseinheiten bzw. Moosstücke besser am Untergrund anlagern.

Aufgrund seiner Eigenschaft bei Anwesenheit von Ca2+-Ionen verstärkt zu gelieren, eignet sich besonders Alginat für diese Funktion. Die Verwendung von Alginat bedeutet, dass dieses schon bei relativ geringen Temperaturen in der Lösung aufgelöst werden kann, anschließend bleibt die Lösung bis zur Anbringung am vorgesehenen Untergrund weitestgehend flüssig.

Bei Anbringung an mineralischen Untergründen, d.h. also Calcium-haltigen Untergründen, bildet das Alginat ein stabiles Gel und der Moos-Starter wird aktiv. Alternativ zu verwendende Biopolymere wären z.B. Agar-Agar, Karrageen oder Gelatine, diese Biopolymere benötigen jedoch eine etwas höhere Temperatur um gelöst zu werden und besitzen auch nicht die besonderen Eigenschaften bei der Anwesenheit von Ca2+-lonen.

Dem folgt die Wahl mindestens einer Moosart für das zuzugebende Moos und die Zugabe des Mooses. Die geeignete Moosart hängt von verschiedenen Parametern ab, insbesondere von der Beschaffenheit der vorgesehenen Fläche und dem zu erwartenden Klima. Beim Klima ist selbstverständlich nicht auf die Klimazone abzustellen, sondern auf die konkreten Bedingungen am Aufstellort der Fläche. So gilt es für eine Nordwand unter Umständen eine andere Moosart auszuwählen als für eine Südwand. Bei einer geplanten Aufstellung in einem Innenraum ist im Regelfall eine andere Moosart bevorzugt als bei der Aufstellung in einem Außenraum. Es ist häufig auch nicht erforderlich die jeweils optimale Moosart auszuwählen, da das Verfahren vielfach auch mit einer nicht optimalen Moosart ordentlich funktioniert.

Die Moosstücke können ganz einfach durch zerkleinern von Moospflanzen mittels z.B. eines Stab-Mixers/Pürierstabes (hand-blender) hergestellt werden. Aufgrund der großen Regenerationsfähigkeit vieler Moose können diese Stücke bei geeigneten Randbedingungen problemlos weiterwachsen. Es ist darauf zu achten, dass die Moosverbreitungseinheiten bzw. Moosstücke klein genug sind, d.h. im Regelfall maximal wenige mm, damit ein problemloses Anbringen des Moos-Starters möglich ist.

Die Erwähnung eines einfachen Stab-Mixers soll keinesfalls suggerieren, dass das Verfahren nicht im großen Maßstab einsetzbar wäre. Es zeigt vielmehr auf, dass es sich um ein Verfahren handelt, welches gerade nicht nur unter Laborbedingungen, sondern auch im praktischen Einsatz funktioniert.

Wie bereits angedeutet hat die Auswahl der geeigneten Moospflanzen große Bedeutung. Es sollen für den jeweiligen Anwendungsfall jeweils die am besten geeigneten, nach Möglichkeit heimischen, Moosarten ausgewählt werden. Für mineralische, Zement oder Kalk gebundenen Untergründe eigenen sich besonders gut Moosarten, die bekannt dafür sind, dass sie an entsprechenden Untergründen natürlich vorkommen, wie, z.B. *Tortula* spp., insbesondere *Tortula muralis* und verwandte Arten, *Orthotrichum* spp., insbesondere *Orthotrichum diaphanum, Schistidium* spp., *Bryum* spp., insbjesondere *Bryum argenteum* und *Bryum capillare* s.l., *Ceratodon* spp., insbesondere *Ceratodon purpureus, Tortella* spp., insbesondere *Tortella toruosa, Grimmia* spp., *Homalothecium* spp., insbesondere *Homalothecium sericeum* und *Homalothecium lutescens, Funaria* spp, insbesondere *Funaria hygrometrica, Palustriella* spp., insbesondere *Palustriella commutata, Leucodon* spp., insbesondere *Leucodon sciuroides, Pseudolekella* spp., insbesondere *Pseudolekeella nervosa, Marchantia* spp., insbesondere *Marchantia polymorpha* s.l., *Brachythecium* spp, *Brachytheciastrum* spp., *Lescuraea* spp., *Leskea* spp., *Pseudoleskea* spp., *Sciuro-hypnum* spp., *Eurhynchium* spp., *Rhynchostegium* spp., *Syntrichia* spp., sowie alle weiteren Fels- Gesteins- und Rindenmoose.

Zur Nomenklatur dieser und folgender Aufzählung von europäischen Arten siehe Grolle, R. & Long, D. (2000) An annotated checklist of the Hepaticae and Anthocerotae of Europe and Macaronesia. Journal of Bryology 22: 103-140.
Und
Hill, M.O., Bell, N., Bruggeman-Nannenga, M.A., Brugués, M., Cano, M.J., Enroth, J., Flatberg, K.I., Frahm, J.-P., Gallego, M.T., Garilleti, R., Guerra, J., Hedenäs, L., Holyoak, D.T., Hyvönen, J., Ignatov, M.S., Lara, F., Mazimpaka, V., Muñoz, J. & Söderström, L. (2006): An annotated checklist of the mosses of Europe and Macaronesia. Journal of Bryology 28: 198-267.

Die genannten Moosarten sind sehr häufig und sehr weit verbreitet, sodass auch bei einer Applikation außerhalb von Deutschland/Europa großteils auf lokale Populationen als Ausgangsmaterial zurückgegriffen werden kann. Darüber hinaus eignen sich, je nach Anwendungssituation, vor allem Mikroklima, Neigung und Untergrund, viele weitere Gesteins-, Rinden- und Bodenmoose wie z.B. *Amblystegium serpens, Leucodon sciuroides, Pseudoleskeella nervosa, Hypnum cupressiforme, Brachyteciastrum velutinum, Brachythecium salebrosum, Syntrichia papillosa, Syntrichia laevipila, Syntrichia virescens, Pogonatum aloides, Polytrichastrum formosum, Polytrichum piliferum, Polytrichum commune, Oligotrichum hercynicum, Atrichum undulatum, Dicranum scoparium, Dicranella heteromalla, Marchantia polymorpha, Conocephalum conicum, Lunularia cruciata, Porella platyphylla, Radula complanata* und viele mehr.

Eine Übersicht über die für Europa geeigneten Moose findet sich in Frey, W., Frahm, J.-P., Fischer, E., Lobin, W., Blockeel, T.L. (2006): The Liverworts, Mosses and Ferns of Europe. Harley Books, Martins: 512 pp.

Wesentlich erscheint, dass auf lokale Populationen als Ausgangsmaterial zurückgegriffen werden kann. Das bedeutet, dass bei der Auswahl ggf. auch lokale Gegebenheiten, so etwa das örtliche Artenangebot, berücksichtigt werden sollen.

Der Grundsatz weitestgehend lokalen Gesichtspunkten bei der Auswahl der Arten Rechnung zu tragen, gilt letztlich in allen Klimazonen. Zunächst sollen Verbreitungseinheiten der ausgewählten Arten aus der Natur entnommen werden. Mittel- und langfristig soll jedoch eine Kultur der ausgewählten Arten vorgezogen werden, jedenfalls wenn es gilt eine Belastung natürlicher Populationen zu vermeiden. Eine Verwendung geschützter oder gefährdeter Moosarten dürfte zwar technisch möglich sein, ist aber ersichtlich abzulehnen.

Es gibt nun zwei wesentliche unterschiedliche Ausführungsformen der Erfindung. Es können zunächst die Verbreitungseinheiten von Moosen, wie z.B. Sporen, Brutkörper oder andere Brutorgane, Suspensionen aus Mooskulturen bzw. Moostücke in die Flüssigkeit gegeben werden und anschließend kann die Flüssigkeit, welche die Verbreitungseinheiten enthält, auf die Fläche aufgebracht werden.

Alternativ ist es auch möglich die Flüssigkeit, der keine Verbreitungseinheiten zugegeben worden sind, auf der Fläche aufzubringen und anschließend die Verbreitungseinheiten aufzubringen.

Allgemein gilt, dass die Reihenfolge der Verfahrensschritte beliebig ist, soweit sich nicht für den Fachmann eine gewisse Reihenfolge zwingend ergibt.

Es gilt die Flüssigkeit auf die Fläche aufzubringen. Im Regelfall bietet es sich an die Flüssigkeit mit einem Pinsel aufzustreichen. Es ist aber beispielsweise auch möglich die Flüssigkeit aufzuspritzen. Freilich sind Aufbringverfahren zu vermeiden, die die Flüssigkeit schädigen. Dies wäre etwa der Fall, würde man die Flüssigkeit mit einer Düse aufspritzen, wenn beim Durchpumpen der Flüssigkeit durch die Düse etwa die zugegebenen Verbreitungseinheiten gleichsam herausgefiltert würden.

Mit dem oben beschriebenen Verfahren wird eine homogene und dauerhafte Moosbedeckung in kurzer Zeit erreicht, je nach Größe der zu bedeckenden Fläche kann eine homogene Moosbedeckung innerhalb eines Tages oder weniger Tage angebracht werden. Es ermöglicht vor allem eine schnelle und homogene Besiedlung von mineralischen Gebäudeoberflächen durch geeignete Moose.

Die Erfindung erlaubt also eine Begrünung durch eine unmittelbare Ansiedlung der Moose, insbesondere an mineralischen Untergründen. Damit entfällt die Notwendigkeit einer Befestigung und es kann in einfacher Weise eine Begrünung vertikaler Flächen erreicht werden.

Das Verfahren ist nicht auf vertikale Flächen begrenzt. Der wesentliche Vorteil zeigt sich aber immer dann, wenn ohne das erfindungsgemäße Verfahren eine Befestigung erforderlich wäre. Daher sind vertikale Flächen der Hauptanwendungsfall, auch aufgrund ihrer hohen Verbreitung und der bislang fehlenden Begrünung oder anderweitigen Nutzung.

Wie erwähnt wird in einer Ausführungsform das Moos, genauer gesagt die Verbreitungseinheiten, in die Flüssigkeit eingearbeitet und die Flüssigkeit mit dem Moos an der Fläche aufgebracht. Dieser Ablauf ist oben bereits beschrieben. Dies dürfte vielfach der einfachste und sicherste Weg sein, da unter definierten Bedingungen das Moos in die Flüssigkeit gegeben wird. Der im allgemeinen aufwändige Arbeitsgang Flüssigkeit und Moos auf die Fläche aufzubringen ist nur einmal durchzuführen, wenn das Moos bereits in die Flüssigkeit gegeben ist.

In einer Ausführungsform wird die Flüssigkeit auf die Fläche aufgebracht und anschließend das Moos, genauer gesagt die Verbreitungseinheiten, auf die Fläche aufgebracht. Die Flüssigkeit kann beispielsweise mittels Pinsel, Walze oder Sprühgerät aufgebracht werden, also in einer zum Aufbringen einer Flüssigkeit üblichen Weise.

Es ist im Grunde nicht erforderlich, das Moos komplett in die Flüssigkeit einzuarbeiten. Zunächst die Flüssigkeit aufzubringen und dann das Moos aufzubringen hat sich als günstig erwiesen, da auf diese Art und Weise die Flüssigkeit sich besonders gut mit der Fläche verbindet und die Moosfragmente und Moossporen (Verbreitungseinheiten) anschließend gut haften.

Beim anschließenden Aufbringen der Verbreitungseinheiten, genügt es oft die Verbreitungseinheiten oberflächlich auf die Fläche aufzubringen. Günstig ist dabei die Verbreitungseinheiten in lufttrockener Form auf die noch feuchte, auf der Fläche aufgebrachte Nährlösung aufzubringen, etwa aufzublasen. Dadurch wird ein besonders dichter und homogener Auftrag erreicht.

In einer Ausführungsform wird die Fläche vor dem Aufbringen der Flüssigkeit befeuchtet. Dabei empfiehlt es sich, die zu bearbeitende Oberfläche mit Wasser anzufeuchten, sodass sie nicht mehr tropfnass, aber gerade noch feucht ist. Dies kann zum einen die Haftung der Flüssigkeit an der Wand verbessern. Zum anderen kann der Bedarf an Flüssigkeit, deren Bereitstellung mit Aufwand und Kosten verbunden ist, reduziert werden. Die Flüssigkeit wird zum Mooswachstum meist nur in einem oberflächlichen Bereich benötigt. Wird die Flüssigkeit etwa auf eine trockene Wand aufgebracht, kann diese vielfach in die Wand einziehen in einer für das Mooswachstum nicht erforderlichen Menge. Das Befeuchten der Fläche kann mitunter sehr einfach erfolgen. So kann etwa eine Außenwand einfach mit einem Schlauch angespritzt werden.

In einer Ausführungsform ist in einer ersten Zeitspanne, beispielsweise in einer Zeit von maximal 6 Monaten, insbesondere in einer Zeit von maximal 3 Monaten, ein Schlagregenschutz vorhanden und/oder es erfolgt eine Befeuchtung mit Wasser. Der Schlagregenschutz, etwa durch ein vorgehängtes Netz, verhindert, dass die Flüssigkeit und das darin enthaltene Moos vom Regen abgewaschen werden. Die Befeuchtung mit Wasser bewirkt bessere Wachstumsbedingungen für das Moos. Sobald das Moos hinreichend angewachsen ist, sind keine derartigen Maßnahmen mehr erforderlich, daher die vorgenannten zeitlichen Beschränkungen. Vollständigkeitshalber soll nicht verschwiegen werden, dass auch gut angewachsenes Moos durch außergewöhnliche Wetterereignisse, wie extremer Schlagregen, Sturm, Trockenheit, extremer Frost und dergleichen geschädigt werden kann. Auch kann Moos in seltenen Fällen aus unbekannten Gründen absterben. Dabei müssen die Zeitspanne in der ein Schlagregenschutz vorhanden ist und die Zeitspanne in der eine Befeuchtung mit Wasser erfolgt nicht gleich groß sein.

Insgesamt ist aber angewachsenes Moos eine pflegeleichte und beständige Begrünung. Die Erfindung wurde von den Erfindern ursprünglich treffend als "Moos-Starter" bezeichnet. Dies bringt sehr gut zum Ausdruck, dass nur am Beginn aktive Maßnahmen erforderlich sind. Sobald die Flüssigkeit und das Moos an der Fläche aufgebracht sind, ist allenfalls geringer Pflegaufwand gegeben, bis das Moos angewachsen ist. Sobald das Moos fest angewachsen ist, ist im Normalfall praktisch gar keine Pflege mehr erforderlich.

In einer Ausführungsform wird die Fläche vorbehandelt, um eine gewünschte Rauheit und/oder Porosität zu erhalten. Dabei geht es darum die Oberfläche rauer zu machen und/oder Poren zu öffnen. Wichtig ist dabei, dass die erhaltenden Vertiefungen oder Poren eine Größe von 0,01 mm bis 1 bis 2 mm haben. Beim unteren Wert, also den 0,01 mm handelt es sich um den kleinsten Querschnitt der Wurzelhaare der Moospflanzen.

Zum Aufrauen kann eine handelsübliche Ätzpaste aufgetragen werden, muss aber nach Einwirken wieder gründlich abgespült werden. Dieses Vorgehen empfiehlt sich besonders bei harten, vertikal aufzustellenden oder aufgestellten Betonoberflächen. In manchen Fällen, also bei einem besonders glatten und harten Untergrund, kann auch ein mechanisches Aufrauen der Oberfläche sinnvoll sein.

Um das Öffnen der Poren zu verstehen, ist folgender Gesichtspunkt wichtig. Die Oberfläche etwa von Porenbeton ist häufig weitgehend glatt, während unmittelbar unter der Oberfläche Poren liegen. Wird nun, etwa durch die Ätzpaste, ein wenig Beton abgetragen, öffnen sich die Poren.

Selbstverständlich kann das Aufrauen und/oder das Öffnen der Poren auch durch mechanische Einwirkung erfolgen.

Es versteht sich, dass es natürlich am günstigsten ist gleich eine Fläche zu wählen, die bereits die gewünschte Rauheit oder Porosität aufweist. Etwa bei der nachträglichen Begrünung einer Gebäudewand hat man aber keine Wahl. Auch kann es Anwendungsfälle geben, bei denen ein Material zum Einsatz kommen soll, welches im Normalfall nicht rau und/oder porös ist.

In einer Ausführungsform wird die moosbewachsene Fläche in einer geschützten Umgebung bereitgestellt und nach Anwachsen des Mooses an der Fläche wird die moosbewachsene Fläche an einer witterungsexponierten Fläche befestigt. Wie oben dargestellt, kann mit dem erfindungsgemäßen Verfahren eine Fläche eines witterungsexponierten Gebäudes mit Moos begrünt werden. Es bringt aber auch Vorteile, die Fläche in einer geschützten Umgebung mit Moos zu begrünen und nach Anwachsen des Mooses an der Fläche die moosbewachsene Fläche an einer witterungsexponierten Fläche zu befestigen. In einer geschützten Umgebung - prominentes Beispiel für eine geschützte Umgebung ist die Werkshalle eines Betriebs, der die moosbewachsenen Flächen herstellt - erfolgt die Begrünung zuverlässiger und einfacher. Etwa der Aufwand für einen Starkregenschutz kann im Allgemeinen entfallen, da in einer geschützten Umgebung kein Starkregen auftritt. Dem steht aber entgegen, dass die moosbewachsene Fläche noch an den gewünschten Einsatzort transportiert und geeignet befestigt werden muss.

Beansprucht wird auch eine moosbewachsene Fläche, bei der das Moos nach dem oben beschriebenen Verfahren aufgebracht ist. Zur Vermeidung von Wiederholungen wird auf die Beschreibung des Verfahrens verwiesen.

### Ausführungsbeispiel

Anhand von Figuren wird die Erfindung nachfolgend detaillierter beschrieben. Dabei zeigen schematisch
Figur 1 einen Behälter, in dem die Mischung angerührt wird
Figur 2 eine aufgeraute Betonfläche
Figur 3 eine aufgeraute Betonfläche mit zwei moosbewachsenen Bereichen
Figur 4 eine aufgeraute Betonfläche mit vier moosbewachsenen Bereichen

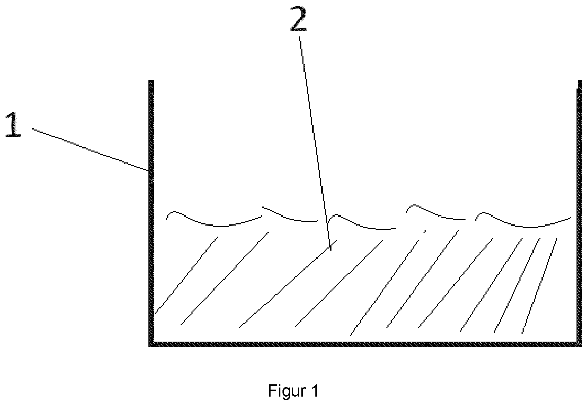

In einem in Figur 1 schematisch gezeigten Behälter 1 wird eine Nährlösung hergestellt, die dem Murashige-Skoog Medium entspricht, da diese eine ausgewogene Mischung von Pflanzennährstoffen und Spurenelementen enthält. Der Nährlösung wird Alginat als Biopolymer zugegeben, um eine aufzubringende Flüssigkeit 2 zu erhalten. Zur Vermeidung von Wiederholungen wird auf die obenstehenden Ausführungen verwiesen.

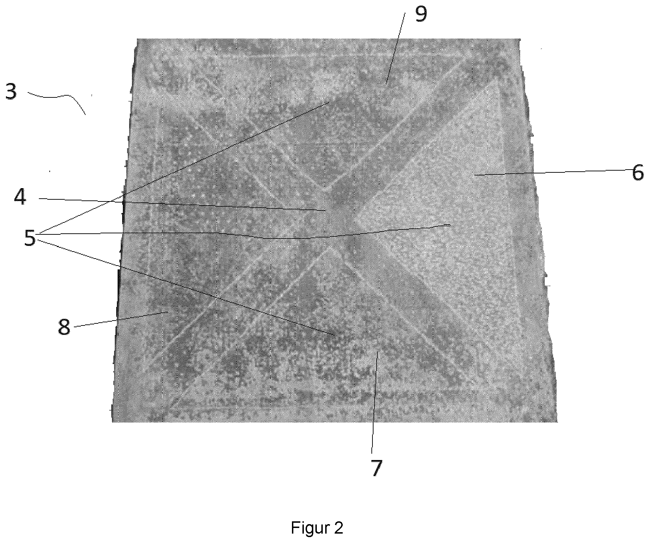

In Figur 2 ist eine Betonplatte 3 gezeigt. Das auf der Betonplatte zu erkennende Kreuz 4 hat keine technische Bedeutung, sondern dient zur Veranschaulichung, wie in den nachfolgenden Ausführungen deutlich wird. Zu erkennen ist eine Aufrauhung 5. Diese wurde mit einem Meißel von Hand eingearbeitet.

Durch das Kreuz 4 wurden willkürliche Plattenbereiche 6, 7, 8 und 9 geschaffen. Im nächsten Schritt wurde in den Plattenbereichen 7 und 9 Flüssigkeit 2, in Figur 2 nicht dargestellt, mit einem Pinsel aufgebracht.

Es wurde die Moosart *Homalothecium sericeum* ausgewählt. Aus der Natur entnommenes Moos wurde in kleine, wenige Millimeter große Stücke zerteilt um als Moosverbreitungseinheiten dienende Moosstücke zu erhalten. Die Moosverbreitungseinheiten wurden auf die Plattenbereiche 6 und 8 aufgestreut, als die Flüssigkeit 2 gerade noch feucht genug war, dass die aufgestreuten Moosverbreitungseinheiten an der vertikal aufgestellten Betonplatte 3, genauer gesagt in den Plattenbereichen 6 und 8 haften blieb.

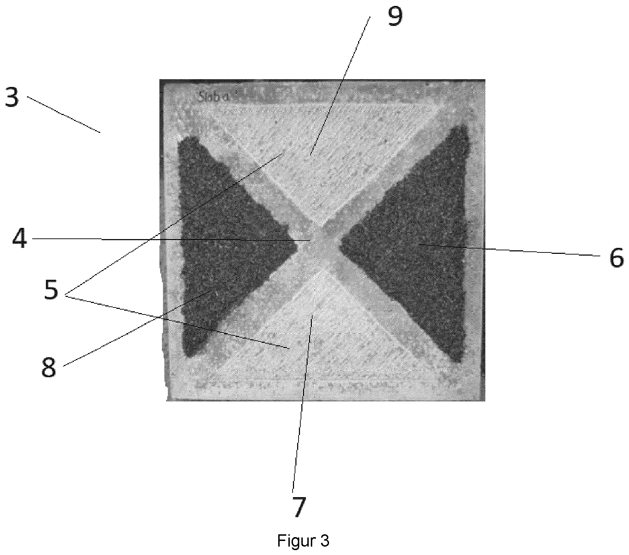

Wie in Figur 3 zu erkennen ist, ist in den Plattenbereichen 6 und 8 Moos homogen verankert, so dass in den Plattenbereichen 6 und 8 eine moosbewachsene begrünte Fläche entstanden ist. Damit ergaben sich die in Figur 3 gezeigten moosbewachsene Flächen der Betonplatte 3.

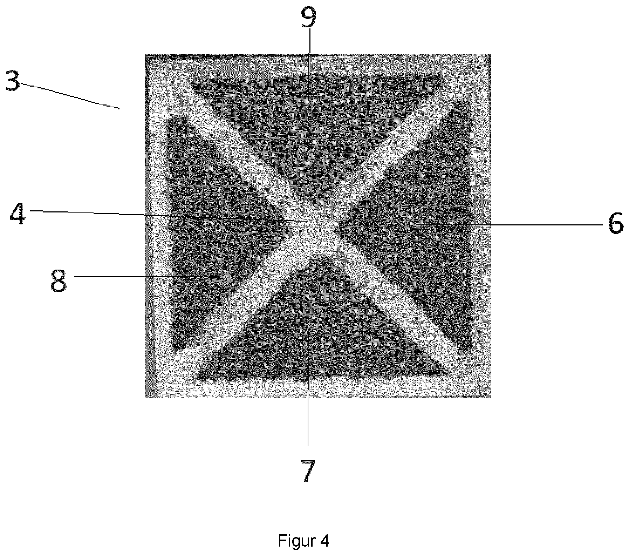

Ebenso wurde in den Plattenbereichen 7 und 9 Flüssigkeit 2 aufgebracht und als Moosarten *Tortula muralis, Schistidium* spp sowie *Bryum argenteum* ausgewählt. Wie oben beschrieben wurden Moosverbreitungseinheiten gebildet und eine Mischung der Moos-verbreitungseinheiten der gewählten Moosarten auf die Plattenbereichen 7 und 9 aufgebracht. Damit ergab sich die in Figur 4 gezeigte moosbewachsene Betonplatte 3. Es hat anschließend wenige Monate gedauert (ca. 1 bis 3, höchstens 1 Jahr), bis sich das Moos durch eigenes Wachstum zusätzlich weiter verankert hat.

## Patentansprüche

1. Verfahren zur Bereitstellung einer moosbewachsenen Fläche (6, 7, 8, 9) mit folgenden Schritten:
Bereitstellen einer Nährlösung mit einer gewählten Mischung an Pflanzennährstoffen und Spurenelementen;
Zugabe eines Biopolymers in die Nährlösung um eine aufzubringende Flüssigkeit (2) zu erhalten;
Wahl mindestens einer Moosart für das zuzugebende Moos;
Zugabe des Mooses;
Aufbringen der Flüssigkeit (2) auf die Fläche (6, 7, 8, 9).

2. Verfahren nach Anspruch 1, **dadurch gekennzeichnet, dass** das Moos in die Flüssigkeit eingearbeitet wird und die Flüssigkeit (2) mit dem Moos an der Fläche (6, 7, 8, 9) aufgebracht wird.

3. Verfahren nach Anspruch 1, **dadurch gekennzeichnet, dass** die Flüssigkeit (2) auf die Fläche (6, 7, 8, 9) aufgebracht wird und anschließend das Moos auf die Fläche (6, 7, 8, 9) aufgebracht wird.

4. Verfahren nach einem der vorhergehenden Ansprüche, **dadurch gekennzeichnet, dass** die Fläche (6, 7, 8, 9) vor dem Aufbringen der Flüssigkeit (2) befeuchtet wird.

5. Verfahren nach einem der vorhergehenden Ansprüche, **dadurch gekennzeichnet, dass** in einer ersten Zeitspanne nach dem Aufbringen der Flüssigkeit (2), beispielsweise in einer Zeit von maximal 6 Monaten, insbesondere in einer Zeit von maximal 3 Monaten, ein Schlagregenschutz vorhanden ist und/oder eine Befeuchtung mit Wasser erfolgt.

6. Verfahren nach einem der vorhergehenden Ansprüche, **dadurch gekennzeichnet, dass** die Fläche (6, 7, 8, 9) vorbehandelt wird, um eine gewünschte Rauheit und/oder Porosität zu erhalten.

7. Verfahren nach einem der vorhergehenden Ansprüche, **dadurch gekennzeichnet, dass** die moosbewachsene Fläche (6, 7, 8, 9) in einer geschützten Umgebung bereitgestellt wird und nach Anwachsen des Mooses an der Fläche (6, 7, 8, 9) die moosbewachsene Fläche (6, 7, 8, 9) an einer witterungsexponierten Fläche befestigt wird.

8. Moosbewachsene Fläche (6, 7, 8, 9), **dadurch gekennzeichnet, dass** das Moos nach einem der vorhergehenden Ansprüche aufgebracht ist.
